# EUROPEAN PATENT APPLICATION

(11) **EP 2 405 520 A1**
(43) Date of publication of application: **11.01.2012**
(21) Application number: 10748771.2
(22) Date of filing: 03.03.2010
(51) Int. Cl.: H01M 10/0525, H01M 4/505, H01M 10/0567, H01M 10/0568, H01M 10/0587

(54) **NONAQUEOUS ELECTROLYTE CELL**

(30) Priority: 03.03.2009 JP 2009049420
(71) Applicant: Shin-Kobe Electric Machinery Co., Ltd., Tokyo 104-0044 (JP)
(72) Inventor: TSUJIKAWA, Tomonobu, Tokyo 108-0023 (JP); MATSUSHIMA, Toshio, Tokyo 108-0023 (JP); ICHIMURA, Masahiro, Tokyo 110-0015 (JP); OGATA, Tsutomu, Tokyo 110-0015 (JP); ARAKAWA, Masayasu, Tokyo 110-0015 (JP); YABUTA, Kahou, Tokyo 108-0023 (JP); MATSUSHITA, Takashi, Tokyo 108-0023 (JP); HAYASHI, Koji, Tokyo 104-0044 (JP); TERADA, Masayuki, Tokyo 104-0044 (JP); ITOH, Youhei, Tokyo 104-0044 (JP); KURITA, Kenji, Tokyo 104-0044 (JP); ISHIZAKI, Yuki, Tokyo 104-0044 (JP)
(74) Representative: Viering, Jentschura & Partner
(86) International application number: PCT/JP2010/053425
(87) International publication number: WO 2010/101177

(57) **Abstract**

A manganese non-aqueous electrolyte battery having safety at a time of battery abnormality and having a long life span is provided. A battery 20 has a cylindrical container 7 having a bottom. An electrode group 6 where a positive electrode plate that a spinel-related lithium manganese complex oxide is used as a positive electrode active material and a negative electrode plate that a carbon material is used as a negative electrode active material are wound via separators W5, is accommodated in the container 7. The electrode group 6 is infiltrated by an electrolytic solution in which LiBF₄ is added as an electrolyte to organic solvent. Further, a phosphazene flame retardant is added at 10 wt% to the electrolytic solution. The electrolytic solution hardly catches fire at a time of battery abnormality and manganese elution can be prevented.

## Description

### FIELD OF THE INVENTION

The present invention relates to a non-aqueous electrolyte battery having an electrode group where a positive electrode plate that a spinel-related lithium manganese complex oxide is used as a positive electrode active material and a negative electrode plate that a carbon material is used as a negative electrode active material are disposed via separators, a non-aqueous electrolytic solution in which an electrolyte is added to organic solvent and by which the electrode group is infiltrated, a phosphazene flame retardant which is added to the non-aqueous electrolytic solution, and a battery container into which the electrode group, the non-aqueous electrolytic solution and the phosphazene flame retardant are accommodated.

### DESCRIPTON OF RELATED ART

A lithium secondary battery among secondary batteries is being widely used as a power source for portable instruments such as VTR camera, note type personal computer, mobile phone and the like. Because the lithium secondary battery has high energy density, it has also been developed as a vehicle-mounted power source for an electric vehicle (EV) or hybrid electric vehicle (HEV), and a part of it comes into practical use.

In general, a lithium secondary battery has a winding group where a strip-shaped positive electrode plate and a strip-shaped negative electrode plate that a positive electrode active material or a negative electrode active material is applied to a metal foil respectively are wound via separators so as not to directly come in contact with each other. This winding group is infiltrated by an electrolytic solution and accommodated into a battery container in a sealed manner. In most of lithium secondary batteries for small and civilian use, a cobalt positive electrode active material such as lithium cobaltate (LiCoO₂) or the like is being used. However, from a viewpoint of cost, safety or the like, a study on a lithium secondary battery using a manganese positive electrode active material such as lithium manganate (LiMnO₂ or LiMn₂O₄) or the like is being made. While, in a lithium secondary battery used as a vehicle-mounted power source for the electric vehicles, a battery having high output and high capacity is required. In order to enhance the battery performance, a sealed type lithium secondary battery equipped with a non-aqueous electrolytic solution using flammable organic solvent is being used.

But, in the sealed type lithium secondary battery, when the battery falls into an abnormal state, for example, when it is exposed abnormally to a high temperature environment or when it reaches an overcharge state due to failure of a charging apparatus or the like, there is a case that internal pressure of the battery increases to burst the battery container because of decomposition or vaporization of the non-aqueous electrolytic solution due to an increase in a temperature. In order to avoid this, generally, in a lithium secondary battery, a current cut-off mechanism (a kind of cut-off switches) which functions according to an increase in battery internal pressure or an internal pressure release mechanism (a safety valve) which releases internal pressure is being employed.

Further, when the battery container bursts, there is a possibility that a gas gushed out of the battery or a leaked non-aqueous electrolytic solution easily catches fire to burn due to internal short-circuit or external firing. In order to solve this, a technique that a phosphazene flame retardant is added to a non-aqueous electrolytic solution is disclosed. (e.g., see JP06-013108A) The phosphazene flame retardant decomposes at a high temperature under battery abnormality or the like to exhibit a fire fighting function.

However, there are drawbacks in that the manganese positive electrode active material lowers a capacity of the negative electrode due to elution of manganese-ions derived from the positive electrode active material and in that, when the phosphazene flame retardant is added to the non-aqueous electrolytic solution, an elution amount of manganese-ions increases further to lower battery performance, in other words, to lower a life span of the battery.

### SUMMARY OF THE INVENTION

In view of the above circumstances, an object of the present invention is to provide a manganese non-aqueous electrolyte battery having safety at a time of battery abnormality and having a long life span.

In order to achieve the above object, the present invention is directed to a non-aqueous electrolyte battery, comprising: an electrode group where a positive electrode plate that a spinel-related lithium manganese complex oxide is used as a positive electrode active material and a negative electrode plate that a carbon material is used as a negative electrode active material are disposed via separators; a non-aqueous electrolytic solution in which a lithium tetrafluoroborate is added as an electrolyte to organic solvent and by which the electrode group is infiltrated; a phosphazene flame retardant which is added at 10 wt% or more to the non-aqueous electrolytic solution; and a battery container into which the electrode group, the non-aqueous electrolytic solution and the phosphazene flame retardant are accommodated.

In the present invention, since the phosphazene flame retardant is added at 10 wt% or more to the non-aqueous electrolytic solution, safety can be enhanced due to that fire catching or the like at the time of battery abnormality is restricted, and since the lithium tetrafluoroborate is added as an electrolyte to the organic solvent, a non-aqueous electrolyte battery having a long life span canbe realizeddue to that the elution of manganese-ions is controlled, regardless that the lithium manganese complex oxide of the positive electrode active material and the phosphazene flame retardant are used together.

In the present invention, a spinel lithiummanganese complex oxide in which a part of a manganese site thereof is replaced by at least one kind of aluminum, magnesium, lithium, cobalt and nickel may be used for the lithiummanganese complex oxide. It is desirable that the non-aqueous electrolytic solution is formed by adding the lithium tetrafluoroborate at 0.8 mole/litter or more. The non-aqueous electrolytic solution may be formed by adding the lithium tetrafluoroborate at 1.0 mole/litter or less. The phosphazene flame retardant can be added at a ratio of 12 wt% or less to the non-aqueous electrolytic solution. The lithium manganese complex oxide can be expressed by chemical formula of LiMn₂₋ₓMₓO₄ (M: at least one kind of Al, Mg, Li, Co and Ni). At this time, a replacing ratio x of a manganese site of the lithium manganese complex oxide may be set in a range of 0≦x≦0.1. The carbon material may be amorphous carbon or graphite. The electrode group may be formed by winding the positive electrode plate and the negative electrode plate via the separators. At this time, the positive electrode plate may be formed by applying a positive electrode mixture including the positive electrode active material to both surfaces of a collector and the negative electrode plate may be formed by applying a negative electrode mixture including the negative electrode active material to both surfaces of a collector.

According to the present invention, effects can be obtained that, since the phosphazene flame retardant is added at 10 wt% or more to the non-aqueous electrolytic solution, safety can be enhanced due to that fire catching or the like at the time of battery abnormality is restricted, and since the lithium tetrafluoroborate is added as an electrolyte to the organic solvent, a non-aqueous electrolyte battery having a long life span can be realized due to that the elution of manganese-ions is controlled, regardless that the lithiummanganese complex oxide of the positive electrode active material and the phosphazene flame retardant are used together.

### BRIEF DESCRIPTION OF THE DRAWINGS

Fig. 1 is a sectional view of a cylindrical lithium-ion secondary battery of an embodiment to which the present invention is applicable; and
Fig. 2 is a graph showing when a discharge capacity of the cylindrical lithium-ion secondary battery of example to an added amount of LiBF₄ is measured.

### DETAILED DESCRIPTION OF THE PREFERRED EMBODIMENTS

With reference to the drawings, an embodiment in which the present invention is applied to a cylindrical lithium-ion secondary battery will be explained below.

### (Structure)

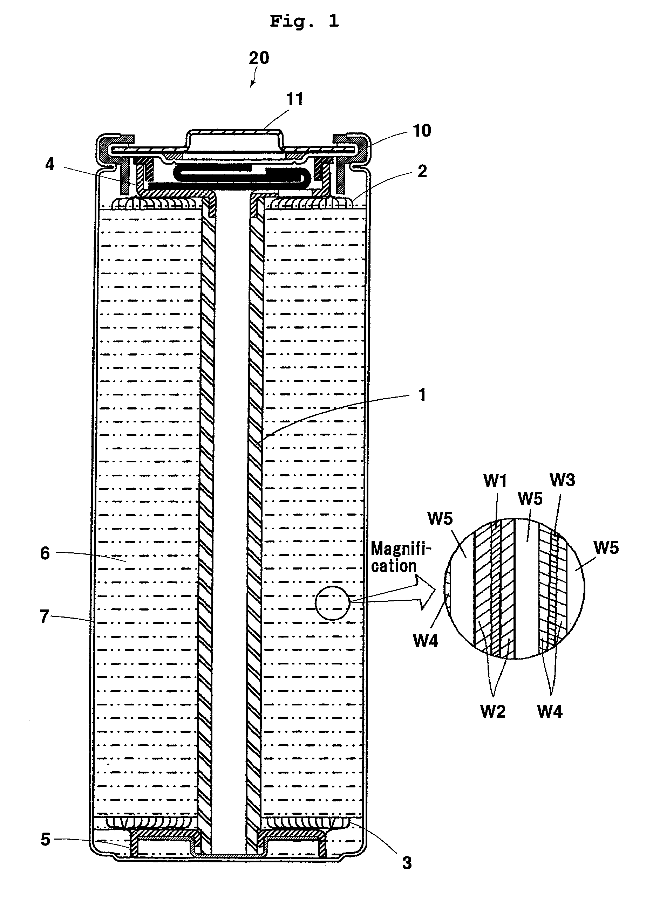

As shown in Fig. 1, a cylindrical lithium-ion secondary battery 20 of this embodiment has a cylindrical battery container 7 made of nickel plated steel and having a bottom, and an electrode group 6 which is formed by winding a strip-shaped positive electrode plate and a strip-shaped negative electrode plate spirally through separators W5 around a hallow cylindrical rod core 1 made of polypropylene.

An aluminum made positive electrode collecting ring 4 for collecting electric potential from the positive electrode plate is disposed at an upper side of the electrode group 6 approximately on an extension line of the rod core 1. The positive electrode collecting ring 4 is fixed to an upper end portion of the rod core 1. Each end portion of positive electrode lead pieces 2 led from the positive electrode plate is welded by ultrasonic welding to a peripheral face of a flange portion extended integrally from a periphery of the positive electrode collecting ring 4. A disc shaped battery lid 11 which houses a safety valve and which functions as a positive electrode external terminal is disposed at an upper side of the positive electrode collecting ring 4. One end of one positive electrode lead of two positive electrode leads, configured by stacking a plurality of ribbons made of aluminum, is fixed to an upper portion of the positive electrode collecting ring 4, and one end of another positive electrode lead is welded to the bottom face of the battery lid 11. Another ends of the two positive electrode leads are welded with each other.

On the other hand, a copper made negative electrode collecting ring 5 for collecting electric potential from the negative electrode plate is disposed at a lower side of the electrode group 6. An outer circumference of a lower end of the rod core 1 is fixed to an inner circumference of the negative electrode collecting ring 5. Each end portion of negative electrode lead pieces 3 led from the negative electrode plate is welded to an outer periphery of the negative electrode collecting ring 5. A copper made negative electrode lead plate, which is disposed at a lower side of the negative electrode collecting ring 5 and which is used for electric conduction, is welded to an inner bottom portion of the battery container 7. In this embodiment, an outer diameter of the battery container 7 is set to 40mm and an inner diameter thereof is set to 39mm.

The battery lid 11 is fixed by performing caulking via a gasket 10 made of EPDM having insulation and heat resisting properties at an upper portion of the battery container 7. For this reason, the positive electrode leads are accommodated in the battery container 7 in a fold-up manner and an interior of the lithium-ion secondary battery 20 is sealed. Incidentally, the lithium-ion secondary battery 20 is given a function as a battery by carrying out initial charge with a predetermined voltage and current.

### (Non-aqueous Electrolytic Solution)

An unillustrated non-aqueous electrolytic solution is injected to the battery container 7. Lithium tetrafluoroborate (LiBF₄) as a lithium salt (electrolyte), added at 0.8mole/liter (0. 8M) or more to mixed solvent of ethylene carbonate (EC) and dimethyl carbonate (DMC) mixed at a volume ratio of 2:3, is used for the non-aqueous electrolytic solution. A phosphazene derivative of which main constituents are phosphorus and nitrogen and which functions as a flame retardant, namely, a phosphazene flame retardant is added at 10 wt% or more to the non-aqueous electrolytic solution.

The phosphazene derivative is a ring compound expressed by a general formula of (NPR₂)₃ or (NPR₂)₄. R in the general formula expresses halogen such as fluorine, chlorine and the like or univalent substituent. As the univalent substituent, alkoxy group such as methoxy group, ethoxy group and the like, aryloxyl group such as phenoxy group, methylphenoxy group and the like, alkyl group such as methyl group, ethyl group and the like, aryl group such as phenyl group, tolyl group and the like, amino group including substitutional amino group such as methylamino group and the like, alkylthio group such as methylthio group, ethylthio group and the like, and arylthio group such as phenylthio group and the like may be listed. Such a phosphazene derivative decomposes under a high temperature environment such as battery abnormality or the like to exhibit in advance a fire preventing function and then a fire fighting function.

The electrode group 6 is made in a manner that the positive electrode plate and the negative electrode plate are wound together via polyethylene-made separators W5 through which lithium-ions can pass each having a thickness of 30µm around the rod core 1 such that both the electrode plates do not come in direct contact with each other. The positive electrode lead pieces 2 and the negative electrode lead pieces 3 are respectively positioned at both end faces opposed to each other with respect to the electrode group 6. The lengths of the positive electrode plate, the negative electrode plate, and the separators W5 are adjusted to set a diameter of the electrode group 6 to 38 ± 0.5mm. Insulating covering or coating is applied in order to prevent electric contact between the electrode group 6 and the battery container 7. An adhesive tape having a base member made of polyimide and adhesive agent made of hexameta-acrylate applied to one surface thereof is used for the insulating covering. The adhesive tape is wound at least one time from a peripheral surface of the flange portion to an outer peripheral surface of the electrode group 6. The winding number is adjusted so that a maximum diameter portion of the electrode group 6 is set as an insulating covering existence portion, and the maximum diameter is set to be slightly smaller than an inner diameter of the battery container 7.

The positive electrode plate constituting the electrode group 6 has an aluminum foil W1 having a thickness of 20µm as a positive electrode collector. A positive electrode mixture including, as a positive electrode active material, powder of lithium manganate (LiMn₂O₄) having a spinel crystal structure, or powder of a spinel lithium manganese complex oxide (LiMn₂₋ₓMnₓO₄, M: at least one kind transition metal selected from Al, Mg, Li, Co and Ni) in which a part of a manganese site (Mn site) in a crystal thereof is replaced by at least one kind among aluminum (Al), magnesium (Mg), lithium (Li), cobalt (Co) and nickel (Ni) is applied to both surfaces of the aluminum foil W1 approximately uniformly and homogeneously. Namely, a thickness of an applied positive electrode mixture layer W2 is approximately uniform and the positive electrode mixture is dispersed in the positive electrode mixture layer W2 approximately uniformly. For example, 8 weight parts of scale-shaped graphite and 2 weight parts of acetylene black as a conductive material, and 5 weight parts of polyvinylidene fluoride (hereinafter abbreviated as PVDF) as a binder, to 100 weight parts of the positive electrode active material, are mixed in the positive electrode mixture. N-methyl-2-pyrolidone (hereinafter abbreviated as NMP) as dispersion solvent is used for applying the positive electrode mixture to the aluminum foil W1. A non-applied portion of the positive electrode mixture, with a width of 30mm, is formed at one side edge along a longitudinal direction of the aluminum foil. The non-applied portion is notched like a comb, and the positive electrode lead pieces 2 are formed by notched remaining portions thereof. In this embodiment, a distance or an interval between the adjacent positive electrode lead pieces 2 is set to 20mm and a width of each of positive electrode lead pieces 2 is set to 5mm. The positive electrode plate, after drying, is pressed and then cut to have a width of 80mm.

On the other hand, the negative electrode plate has a rolled copper foil W3 having a thickness of 10µm as a collector. A negative electrode mixture including carbon powder served as a negative electrode active material in/from which lithium-ions can be occluded/released (intercalated/deintercalated) is applied to both surfaces of the rolled copper foil W3 approximately uniformly and homogeneously. Namely, a thickness of an applied negative electrode mixture layer W4 is approximately uniform and the negative electrode mixture is dispersed in the negative electrode mixture layer W4 approximately uniformly. Amorphous carbon power or graphite, or a mixture thereof is used for the negative electrode active material. For example, 10 weight parts of PVDF as a binder is added, to 90 weight parts of carbon powder, in the negative electrode mixture. A non-applied portion of the negative electrode mixture, with a width of 30mm, in the same manner as the positive electrode plate, is formed at one side edge along a longitudinal direction of the rolled copper foil W3 to form negative electrode lead pieces 3. In this embodiment, a distance between the adjacent negative electrode lead pieces 3 is set to 20mm and a width of each of negative electrode lead pieces 3 is set to 5mm. The negative electrode, after drying, is pressed and then cut to have a width of 86mm. Incidentally, a length of the negative electrode plate is set, when the positive electrode plate and the negative electrode plate are wound, 120mm longer than that of the positive electrode plate such that the positive electrode plate does not go beyond the negative electrode plate in a winding direction at innermost and outermost winding circumferences. Besides, a width of an applied portion of the negative electrode mixture is set 6mm longer than that of the positive electrode mixture such that the applied portion of the positive electrode mixture does not go beyond the applied portion of the negative electrode mixture in a winding direction and a vertical direction.

### (Effects and the like)

Next, effects and the like of the lithium-ion secondary battery 20 according to this embodiment will be explained.

The phosphazene flame retardant is added in the lithium-ion secondary battery 20 of this embodiment. This phosphazene flame retardant decomposes under a high temperature environment such as battery abnormality or the like to exhibit in advance a fire (flame) preventing function and then a fire fighting function. For this reason, fire-resistant and fire fighting properties are given to the non-aqueous electrolytic solution due to the phosphazene flame retardant. Thus, even if the non-aqueous electrolytic solution catches fire when the battery falls into abnormality such as an overcharge state or the like or when it is exposed abnormally to a high temperature environment, since the fire is extinguished, safety of the battery is enhanced.

Further, the phosphazene flame retardant is added at 10 wt% or more to the non-aqueous electrolytic solution in the lithium-ion secondary battery 20 of this embodiment. If the adding amount of the phosphazene flame retardant is too small, there is a case that, when the battery catches fire at the time of battery abnormality, the fire cannot be extinguished. To the contrary, if the adding amount of the phosphazene flame retardant is too large, since ion-conduction is prevented at the time of normal discharging/charging, battery performance such as a capacity, output or the like drops. In other words, when the adding amount of the phosphazene flame retardant is large, it is advantageous in fire resistance but disadvantageous in battery performance. For this reason, it is preferable that the phosphazene flame retardant should be added at 10 wt% or more but it should be as a small amount as possible to the non-aqueous electrolytic solution.

Further, LiBF₄ as an electrolyte is added to the non-aqueous electrolytic solution at 0.8M or more in the lithium-ion secondary battery 20 of this embodiment. Conventionally, a manganese positive electrode active material such as a lithium manganese complex oxide or the like has a drawback in elution of manganese-ions derived from the positive electrode mixture layer W2. Besides, when the manganese positive electrode active material is used with the phosphazene flame retardant together, there was a drawback in that the elution of manganese-ions increases further. If the elution amount of manganese-ions increases, since a percentage of doping/de-doping lithium-ions at a positive electrode side decreases to increase an irreversible capacity, a battery capacity becomes lowered. Further, it is considered that eluted manganese-ions deposit to form a dendrite that may cause micro-short circuits. However, in the lithium-ion secondary battery 20, since LiBF₄ as an electrolyte, which prevents the elution of manganese-ions, is added to the non-aqueous electrolytic solution at 0.8M or more, the elution of manganese-ions can be restricted. Accordingly, battery performance such as a capacity, output or the like can be maintained, and in consequence it enables the battery to have a long life span. While, when the adding amount of LiBF₄ is too small, since the elution of manganese-ions is not restricted and electric conduction of the non-aqueous electrolytic solution is lowered, battery performance such as a capacity, output or the like becomes lowered. To the contrary, even if the adding amount of LiBF₄ is large, it cannot be expected to have an effect of restricting the elution of manganese-ions. Thus, it is preferable that LiBF₄ should be added at 0.8M or more but it should be as a small amount as possible to the non-aqueous electrolytic solution.

Furthermore, as a positive electrode active material, the spinel-related lithium manganese complex oxide in which a part of the Mn site of lithium manganate having a spinel crystal structure is replaced by at least one kind of Al, Mg, Li, Co and Li is used in the lithium-ion secondary battery 20 of this embodiment. Accordingly, since a crystal structure thereof can be made strong, the elution of manganese-ions can be restricted comparing with a case that lithium manganate is used as a positive electrode active material.

Incidentally, in the lithium-ion secondary battery 20 of this embodiment, the mixed solution of EC and DMC mixed at the volume ratio of 2:3 was explained as organic solvent of the non-aqueous electrolytic solution. However, the present invention is not limited to the same. As organic solvent usable other than this embodiment, diethyl carbonate, polypropylene carbonate, ethyl-methyl carbonate, vinylene carbonate, 1,2-dimethxy ethane, 1,2-diethxy ethane, γ-butyrolactone, tetrahydrofuran, 1,3-dioxolane, 4-methyl-1, 3-dioxolane, diethyl ether, sulfolane, methyl-sulfolane, acetonitrile, propionitrile or the like may be listed. Further, such organic solvent may be used in single or mixed solvent of at least two kinds thereof may be used. Furthermore, a mixing ratio of these organic solvents is not limited, too.

Further, in the lithium-ion secondary battery 20 of this embodiment, 8 weight parts of scale-shaped graphite and 2 weight parts of acetylene black as a conductive material, and 5 weight parts of PVDF as a binder, to 100 weight parts of the positive electrode active material, as a positive electrode mixture, was explained. However, the present invention is not restricted to this. Other conductive material normally used for a non-aqueous electrolyte secondary battery may be used, or the conductive material may not be used for the battery. Other binder may be used, too. As a binder usable other than this embodiment, polymers of: polytetrafluoroethylene (PTFE), polyethylene, polystyrene, polybutadiene, isobutylene-isopren rubber, nitrile rubber, styrene-butadiene rubber, polysulfide rubber, cellulose nitrate, cyanoethyl cellulose, various latex, acrylonitrile, polyvinyl fluoride, vinylidene fluoride, propylene fluoride, chloroprene fluoride and the like, and a mixture thereof may be listed. Furthermore, it goes without saying that a mixed proportion of each material can be changed. Further, a kind, a shape, a crystal structure or the like of the negative electrode active material is not limited particularly to this embodiment.

Furthermore, in the lithium-ion secondary battery 20 of this embodiment, the cylindrical lithium-ion secondary battery 20 was explained. However, this invention is not limited to the same. The present invention may be applied to a battery utilizing a non-aqueous electrolytic solution in general. The shape of a battery is not particularly limited to the embodiment. For example, a square shape or the like may be employed other than the cylindrical shape. Further, the electrode group 6 which is wound by the positive electrode plate and the negative electrode plate was explained. However, the present invention is not restricted to this. For example, an electrode group layered by rectangular positive and negative electrode plates may be employed. Furthermore, the present invention is applicable to a battery having a structure other than the structure that the battery lid 11 is fixed to the battery container 7 by performing caulking in the sealed manner. As an example of such a structure, a battery that positive and negative external terminals penetrate battery lids and the positive and negative external terminals push with each other via the rod core within a battery container may be listed.

### (Examples)

Next, Examples of the lithium-ion secondary battery 20 manufactured according to the above embodiment will be explained below. Incidentally, lithium-ion secondary batteries of Controls (Comparative Examples) manufactured for making a comparison with Examples will also be explained.

### <Example 1>

In Example 1, a lithium-ion secondary battery 20 in which spinel LiMn₂O₄ was used as a positive electrode active material was manufactured.

### <Examples 2 to 6>

As shown in Table 1 below, in Examples 2 to 6, lithium-ion secondary batteries 20 were manufactured in the same manner as Example 1 except that a positive electrode active material in which the Mn site of the spinel LiMn₂O₄ was replaced by Al, Mg, Li, Co and Ni by 5% respectively was used. As the positive electrode active material, lithium manganese aluminum complex oxide (LiMn_{1.9}Al_{0.1}O₄) was used in Example 2, lithium manganese magnesium complex oxide (LiMn_{1.9}Mg_{0.1}O₄) was used in Example 3, lithium manganese lithium complex oxide (LiMn_{1.9}Li_{0.1}O₄) was used in Example 4, lithiummanganese cobalt complex oxide (LiMn₁.₉Co₀.₁O₄) was used in Example 5, and lithium manganese nickel complex oxide (LiMn_{1.9}Ni_{0.1}O₄) was used in Example 6, respectively.

### <Example 7>

As shown in Table 1 below, in Example 7, a lithium-ion secondary battery 20 was manufactured in the same manner as Example 3 except that a non-aqueous electrolytic solution in which the phosphazene flame retardant was added at 12 wt% to the non-aqueous electrolytic solution was used.

### <Controls 1 and 2>

As shown in Table 1 below, in Control 1, a lithium-ion secondary battery was manufactured in the same manner as Example 1 except that a non-aqueous electrolytic solution which does not contain the phosphazene flame retardant and in which lithium hexafluorophosphate (LiPF₆) as an electrolyte was dissolved at 0.8M, in place of LiBF₄, was used. In Control 2, a lithium-ion secondary battery was manufactured in the same manner as Example 1 except that a non-aqueous electrolytic solution in which LiPF₆ as an electrolyte was dissolved at 0.8M was used.

### <Controls 3 to 5>

As shown in Table 1 below, in Controls 3 to 5, lithium-ion secondary batteries 20 were manufactured in the same manner as Example 3 except that a non-aqueous electrolytic solution in which the phosphazene flame retardant was added in a range of from 0 to 0.8 wt% to the non-aqueous electrolytic solution was used. An adding amount of the phosphazene flame retardant was set to 0 wt% (not added) in Control 3, 5 wt% in Control 4, and 8 wt% in Control 5, respectively.

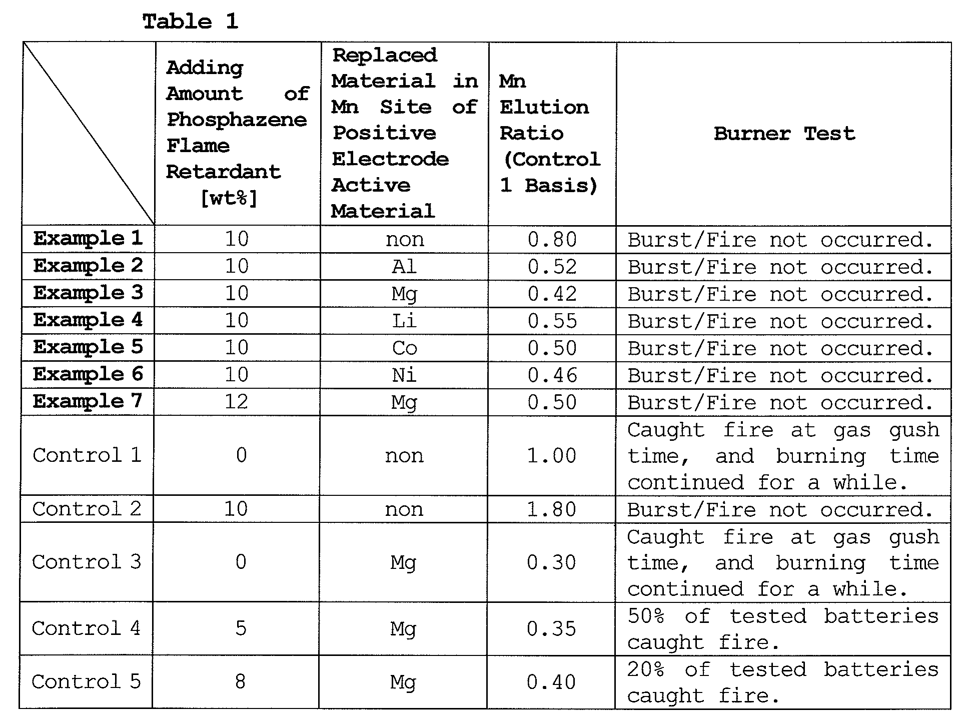

### (Test 1)

Each of lithium-ion secondary batteries of Examples and Controls was disassembled, after leaving them as they are for one month under an environment of 50 deg. C., to measure an amount of manganese-ions in the non-aqueous electrolytic solution with ICP (Inductively Coupled Plasma). A ratio of an amount of manganese-ions in each of lithium-ion batteries of Examples and Controls to an amount of manganese-ions in Control 1 is shown in Table 1 as Mn Elution Ratio. Further, the results of confirming a burst of the batteries and a fire-catching property of the gas or the like gushed out of the batteries, after each of the lithium-ion secondary batteries was heated by a burner, are also shown in Table 1.

### (Evaluation 1)

As shown in the results of Example 1 and Controls 1 and 2, it was understood that, by adding the phosphazene flame retardant at 10 wt% to the electrolytic solution, the battery burst and fire-catching of the gushed gas or the like can be prevented at the time of burner heating. But, from the results of Controls 1 and 2, it was confirmed that the Mn elution amount increases by adding the phosphazene flame retardant to the electrolytic solution. On the other hand, since LiBF₄ was used at 0.8M as an electrolyte in the battery of Example 1, it was found that fire (flame) resistance can be secured and the Mn elution amount can be controlled, compared with the battery of Control 1 to which the phosphazene flame retardant was not added. Further, from the results of Examples 1 to 6, it was understood that the Mn elution amount can be controlled further by replacing the Mn site of the positive electrode active material in the battery of Example 1 with other metal. In particular, it was found that the battery of Example 3, namely, the battery that the lithium manganese complex oxide of which Mn site was replaced by Mg was used as a positive electrode active material can restrict the Mn elution amount best. Furthermore, from the results of Examples 3 and 7 as well as Controls 3 to 5, in a case that the adding amount of the phosphazene flame retardant is less than 10 wt% to the electrolytic solution, the battery caught fire at the time of burner heating. To the contrary, in a case that the adding amount of the phosphazene flame retardant is not less than 10 wt% to the electrolytic solution, the battery burst and catching fire of the gushed gas or the like could be prevented, but it was made clear that the Mn elution amount increases.

### (Test 2)

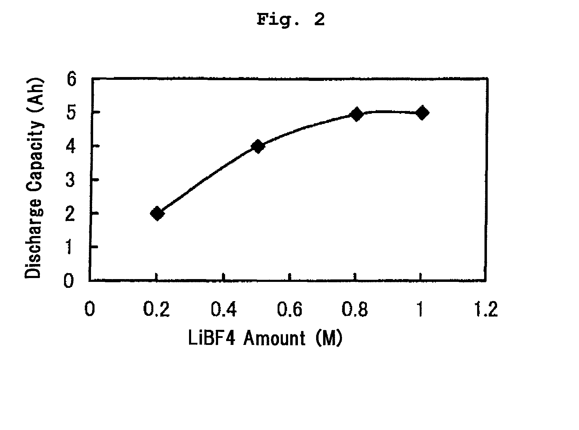

Lithium-ion secondary batteries were manufactured in the same manner as Example 3 except that the adding amount of LiBF₄ was changed in a range of from 0.2M to 1.0M. Discharge test was carried out for each of the lithium-ion secondary batteries at 25 deg. C., 0.2CA. The results of plotting a discharge capacity to the adding amount of LiBF₄ are shown in Fig. 2.

### (Evaluation 2)

It was found that the discharge capacity is lowered in a case that the adding amount of LiBF₄ is less than 0.8M, and that the discharge capacity does not change almost in a case that the adding amount of LiBF₄ is not less than 0.8M. Accordingly, it was made clear that battery performance such as a capacity or the like can be maintained by adding LiBF₄ at 0.8M or more as an electrolyte to the non-aqueous electrolytic solution, and in consequence it enables the battery to have a long life span.

### (Industrial Applicability)

Because the present invention provides a manganese non-aqueous electrolyte battery having safety at a time of battery abnormality and having a long life span, the present invention contributes to manufacturing and marketing of a non-aqueous electrolyte battery. Accordingly, the present invention has industrial applicability.

## Claims

1. A non-aqueous electrolyte battery, comprising:
an electrode group where a positive electrode plate that a spinel-related lithium manganese complex oxide is used as a positive electrode active material and a negative electrode plate that a carbon material is used as a negative electrode active material are disposed via separators;
a non-aqueous electrolytic solution in which a lithium tetrafluoroborate is added as an electrolyte to organic solvent and by which the electrode group is infiltrated;
a phosphazene flame retardant which is added at 10 wt% or more to the non-aqueous electrolytic solution; and
a battery container into which the electrode group, the non-aqueous electrolytic solution and the phosphazene flame retardant are accommodated.

2. The non-aqueous electrolyte battery according to claim 1, wherein the lithium manganese complex oxide is a spinel lithium manganese complex oxide in which a part of a manganese site thereof is replaced by at least one kind of aluminum, magnesium, lithium, cobalt and nickel.

3. The non-aqueous electrolyte battery according to claim 1, wherein the non-aqueous electrolytic solution is formed by adding the lithium tetrafluoroborate at 0.8 mole/litter or more.

4. The non-aqueous electrolyte battery according to claim 3, wherein the non-aqueous electrolytic solution is formed by adding the lithium tetrafluoroborate at 1.0 mole/litter or less.

5. The non-aqueous electrolyte battery according to claim 4, wherein the phosphazene flame retardant is added at a ratio of 12 wt% or less to the non-aqueous electrolytic solution.

6. The non-aqueous electrolyte battery according to claim 2, wherein the lithium manganese complex oxide is expressed by chemical formula of LiMn₂₋ₓMₓO₄ (M: at least one kind of Al, Mg, Li, Co and Ni).

7. The non-aqueous electrolyte battery according to claim 6, wherein a replacing ratio x of a manganese site of the lithium manganese complex oxide is set in a range of 0≦x≦0.1.

8. The non-aqueous electrolyte battery according to claim 7, wherein the carbon material is amorphous carbon or graphite.

9. The non-aqueous electrolyte battery according to claim 1, wherein the electrode group is formed by winding the positive electrode plate and the negative electrode plate via the separators.

10. The non-aqueous electrolyte battery according to claim 9, wherein the positive electrode plate is formed by applying a positive electrode mixture including the positive electrode active material to both surfaces of a collector and the negative electrode plate is formed by applying a negative electrode mixture including the negative electrode active material to both surfaces of a collector.
